# EUROPÄISCHE PATENTSCHRIFT

(11) **EP 2 260 972 B1**
(45) Veröffentlichungstag und Bekanntmachung des Hinweises auf die Patenterteilung: **22.08.2012**
(21) Anmeldenummer: 10006009.4
(22) Anmeldetag: 10.06.2010
(51) Int. Cl.: B23Q 1/54, B23Q 5/10, B23Q 11/12

(54) **Drehfräsaggregat für Werkzeugmaschinen und Berarbeitungssysteme und Verfahren zum Betrieb eines derartigen Drehfräsaggregat**
Rotating milling assembly for machine tools and machining systems and method for operating such an assembly
Unité de fraisage rotatif pour machines-outil et systèmes d'usinage et procédé de fonctionnement d'une telle unité

(30) Priorität: 12.06.2009 DE 102009024964
(43) Veröffentlichungstag der Anmeldung: 15.12.2010
(73) Patentinhaber: NILES-SIMMONS Industrieanlagen GmbH, 09117 Chemnitz (DE)
(72) Erfinder: Naumann, Hans J., Prof. Dr., 09117 Chemnitz (DE); Robotta, Reinhard, 09306 Erlau (DE); Römer, Torsten, 08060 Zwickau (DE); Mitschke, Ulf, 09116 Chemnitz (DE)
(74) Vertreter: Findeisen Hübner Neumann

(56) Entgegenhaltungen:
- WO-A2-02/26438
- FR-A1- 2 631 864

## Beschreibung

Die Erfindung betrifft einen Drehfräsaggregat sowie ein Verfahren zum Betrieb eines derartigen Drehfräsaggregates.

An Werkzeugmaschinen wird die Bewegung von Werkzeugspindeln und ähnlichen Baugruppen überwiegend mit Elektromotoren realisiert, die relativ weit entfernt von der zu bewegenden Baugruppe angeordnet sind und mit dieser über unterschiedliche Verbindungselemente (Zahnräder, Zahnriemen, Kugelgewindetriebe usw.) in Wirkverbindung stehen. Derartige Konstruktionen haben sich grundsätzlich bewährt, sie sind jedoch für moderne Maschinen nur bedingt geeignet. Eine diesbezüglich typische Anwendung ist die Bearbeitung von Werkstücken mittels einer mit Werkzeugen bestückten Schwenkeinheit, bei der ein Arbeitsspindelkopf für Fräsbearbeitungen mit hohen Geschwindigkeiten und Genauigkeiten gedreht und geschwenkt werden muss. Hierfür werden zunehmend sog. Direktantriebe eingesetzt.

In FR-A 2 631 864 wird ein Drehfräsaggregat offenbart, wobei der Schwenkmotor parallel zur Schwenkachse des Spindelgehäuse angeordnet ist.

In US 4 425 818 A1 wird ein Manipulator für Bearbeitungsvorgänge beschrieben, der zwischen einem festen Grundkörper und dem Abschnitt zum Handling unterschiedlicher Werkstücke mehrere Segmente aufweist, die über Gelenke miteinander verbunden sind. Mindestens einem dieser Gelenke ist ein Servomotor als Direktantrieb zugeordnet. Der Servomotor weist einen Stator und einen Rotor auf, wobei eine dieser beiden Baugruppen direkt an einem Antriebselement des Gelenkes angeordnet ist.

Aus EP 0 885 081 B2 ist ein getriebeloser, direkt angetriebener Zweiachsen-Drehkopf für eine Werkzeugmaschinenspindel mit Kardanaufbau bekannt. Der Kardanaufbau enthält eine um eine erste Achse drehbar angeordnete Gabel, die ein Paar voneinander mit Abstand angeordneter Gabelarme aufweist. Zwischen den Gabelarmen ist eine um eine zweite Achse drehbare Spindel angeordnet. An die Gabel ist ein erster Motor zum direkten Antrieb der Gabeldrehung um die erste Achse gekoppelt. Weiterhin ist an die Spindel ein zweiter Motor zum direkten Antrieb der Spindeldrehung um die zweite Achse gekoppelt.

DE 101 04 669 C5 beschreibt einen Antriebskopf für NC-gesteuerte Stellbewegungen einer Werkzeugspindel mit zwei Drehachsen, wobei konzentrisch um jede Drehachse mindestens ein mehrpoliger Außenläufermotor angeordnet ist. Der um die erste Drehachse angeordnete Außenläufermotor weist einen in ein Gehäuse eingesetzten ringförmigen weichmagnetischen Stator und ein ringförmiges Rotorjoch auf. Der um die zweite Drehachse angeordnete Außenläufermotor ist gleichartig aufgebaut und in einem zweiten Antriebsgehäuse angeordnet. Die Werkzeugspindel ist alternativ als Winkelkopf oder als Gabelkopf ausgeführt.

Die benannten Konstruktionen sind als getriebelose Antriebe ausgestaltet und überwiegend für Fräsmaschinen geeignet. Für Drehfräs-Bearbeitungszentren ist der Antrieb der Werkzeugspindel aus Verfahrensgründen, Drehen mit feststehender und Fräsen mit rotierender Spindel, mit einem Antrieb und Getriebestufen vorteilhaft. Für derartige Anwendungen sind die bisher bekannten technischen Lösungen nicht oder nur bedingt geeignet. An Drehfräs-Bearbeitungszentren wird der Antriebskopf überwiegend als Drehfräsaggregat bezeichnet.

Für das Schwenken sind hohe Drehmomente notwendig, während die Schlichtbearbeitung niedrigere Drehmomente erfordert, sofern komplexere Bearbeitungsschritte (z.B. 5-Achs-Simultanbearbeitung, Kombination von Schlicht- und Schruppbearbeitung), hohe Bearbeitungsgeschwindigkeiten (High Performance Milling / HPM oder High Speed Cutting / HSC) und schnelle Änderungen der Relativausrichtung von Werkzeug und Werkstück zueinander realisiert werden müssen.

Aufgabe der Erfindung ist es, eine technische Lösung der eingangs beschriebenen Art eines Drehfräsaggregates für das Drehen, Bohren und Fräsen zu schaffen, die schnelle, exakte und lagefeste Änderungen der Position der jeweils zu bewegenden Baugruppen ermöglicht und die gleichzeitig eine sehr exakte Einstellung der vorgegebenen Position im Bearbeitungsprozess und hohe Momente für große Zerspanung gewährleistet. Zudem wird eine wirksame Temperierung des gesamten Drehfräsaggregates angestrebt, um hohe Genauigkeiten im Fertigungsprozess zu gewährleisten.

Die Aufgabe wird gelöst, indem konzentrisch auf der Schwenkachse der Werkzeugspindel ein Innenläufer-Torquemotor angeordnet ist, dessen Rotor über einen Zwischenring am Werkzeugspindelgehäuse und dessen Stator am Hauptgehäuse des Drehfräsaggregates abgestützt ist. Die Schwenkachse des Antriebskopfes für ein Drehfräs-Bearbeitungszentrum wird nachfolgend als B-Achse bezeichnet. Der Werkzeugspindel ist ein separater Antriebsmotor zugeordnet, der parallel zur B-Achse am Hauptgehäuse des Drehfräsaggregates abgestützt ist und der über eine oder mehrere Getriebestufen mit der Antriebswelle der Werkzeugspindel in Wirkverbindung steht. Dabei ist zu beachten, dass sich durch sehr komplexe Bearbeitungsschritte mit hohen Bearbeitungsgeschwindigkeiten die Bauteile zwangsläufig erwärmen, wodurch sich jedoch Ungenauigkeiten im Bearbeitungsprozess ergeben können. Demzufolge ist dem Drehfräsaggregat die spezielle Gestaltung einer Flüssigkeitskühlung zugeordnet, die mehrere Temperierungskreisläufe aufweist. Damit soll ein thermisch konstantes System geschaffen werden.

Beim vorgeschlagenen Drehfräsaggregat sind der Antrieb des Werkzeuges und die Stellachse des Werkzeuges voneinander getrennt. Die Rotationsachse der Antriebseinheit ist in gleicher Ausrichtung wie die Schwenkachse des Werkzeuges angeordnet.

Über ein Messsystem auf der B-Achse kann die Winkellage der Werkzeugspindel direkt erfasst werden. Unter Berücksichtigung dieser Winkellage ist eine stufenlose Klemmung radial zur B-Achse entsprechend der vorgegebenen Drehwinkelstellung möglich. Dabei verläuft die Symmetrielinie der Klemmeinrichtung ebenfalls auf der Symmetrielinie von der B-Achse.

Um die entstehenden Wärmeleistungen abzuführen, werden unterschiedliche Temperatursysteme und Kühlmittelmengen (Volumenströme) je nach den Genauigkeitsanforderungen optimal an den einzelnen Komponenten angepasst.

Beispielsweise wird die Flüssigkeitskühlung mit mehreren Temperierungskreisläufen für den Innenläufer-Torquemotor, für den Antriebsmotor des Werkzeugantriebs, für das Werkzeugspindelgehäuse und für die Kraftübertragungselemente zwischen Antriebsmotor und Werkzeugspindel vorgesehen, die eine Wärmeübertragung in benachbarte Bauteile der jeweils temperierten Abschnitte verhindert. Folglich werden temperaturbedingte Ungenauigkeiten im Bearbeitungsprozess minimiert. Der Werkzeug-Spindelantrieb ist durch eine Kühlung thermisch vom Messsystem getrennt, so dass auch temperaturbedingte Messfehler verringert werden.

Mit der erfindungsgemäßen Ausgestaltung eines Drehfräsaggregates können die Stellbewegungen um mindestens eine Drehachse sehr schnell und exakt ausgeführt und hohe Bearbeitungsgenauigkeiten erzielt werden.

Als weitere Vorteile sind insbesondere zu nennen:
- hohe realisierbare Drehmomente durch integriertes Getriebe zwischen Antriebsmotor und Werkzeugspindel
- kompakte Bauweise in Bezug auf das Leistungsvermögen
- Möglichkeit der Bearbeitung mit feststehenden und rotierenden Werkzeugen
- große Verfahrwege
- verschleißarme und wartungsfreie Konstruktion der B-Achse ohne notwendige Schmierung
- hohe Zerspanungsleistungen
- sehr hohe Hauptschnittkraft beim Drehen
- die kompakte Bauweise ermöglicht optimal die Adaption von Bohrstangen an dem Werkzeugspindelgehäuse

Somit ist dieses Drehfräsaggregat für Werkzeugmaschinen und Bearbeitungssysteme geeignet, mit denen insbesondere Dreh- Fräs- und Bohrbearbeitungen ausgeführt werden können. In vorteilhafter Weise ist auch ein 5-Achs-Fräsen möglich.

Eine dynamische Vorsteuerung und eine adaptive Anpassung der Regelungsparameter ergeben eine hohe Steifigkeit des Antriebsstranges. Für hohe Belastungen, beispielsweise bei Schruppbearbeitungen, kann die B-Achse zusätzlich geklemmt werden. Weiterhin kann durch Anpassung der Bahndynamik zwischen optimaler Bearbeitungsdauer (Schruppen) und optimaler Oberflächenqualität bzw. Maßhaltigkeit (Schlichten) gewählt werden. Die dynamische Vorsteuerung in allen IPO-Achsen bewirkt durch die Kompensation von Schleppfehlern eine hohe Konturtreue, auch bei HSC-Bearbeitungen.

Für die Anpassung der Regelung an unterschiedliche zu bearbeitende Materialien kann zusätzlich die Grundeinstellung für die B-Achs-Lage- / Drehzahl- und Stromregler durch Umschalten auf verschiedene Parametersätze geändert werden.

Die Überwachung der Lage und Geschwindigkeit der B-Achse erfolgt über einen hoch auflösenden Geber, der eine sehr gute Regelkreisdynamik mit einem schnellen Positionieren ohne Überschwingen und eine hohe Gleichlaufgüte des Antriebs ergibt.

Durch Zuordnung von geeigneter Sensorik (z.B. Schwingungssensoren) kann eine automatische Anpassung der Reglerdaten erfolgen. Weiterhin können diese Sensordaten zur erweiterten Prozessdiagnose eingesetzt werden. Außerdem erfolgt der Einsatz der Schwingungssensoren zum Erfassen des Maschinen- bzw. Baugruppenzustandes. Hierbei werden durch Abarbeiten spezieller Prüf- und Diagnosezyklen nach definierten Zeiträumen durch Vergleich angelernter Sensordaten mit aktuellen Werten insbesondere Unwuchten infolge von Lagerschäden der Spindeleinheit, der Antriebsmotoren und der Spindellager, Vibrationen infolge von Schäden an Führungsbahnen und Kugelrollspindeln oder Fehlern bei der Schmierung sowie Unwuchten durch Schäden am Werkzeug erkannt. Demzufolge ergeben sich wesentliche Vorteile in der vorbeugenden Wartung und Instandhaltung sowie bei der Erkennung eines sich anbahnenden Maschinenausfalls aufgrund mechanischer Fehler.

Durch die bei der Bearbeitung in Lageregelung befindliche B-Achse kann ein erweitertes Prozessüberwachungs- und Adaptive-Control-Prinzip zum Einsatz kommen. Hierbei wird als Eingangsparameter für Bruch- und Momentüberwachung der Strom des B-Achsantriebs ausgewertet. Diese Überwachung über den Strom der B-Achse liefert bessere Ergebnisse als eine bisher übliche und sehr aufwändige Überwachung von X-/ Y-/ Z-Achse, weil die tatsächliche Bearbeitungskraft proportional zum Strom der B-Achse ist, unabhängig von der Werkzeuggeometrie.

Schließlich erlaubt die hohe Anzahl der Freiheitsgrade eine Kompensation systematischer Fehler. In Abhängigkeit der jeweils konkreten Stellung der B-Achse erfolgen gewichtete Verschiebungen in X- und Z-Achse. Als Eingangswerte für den Kompensationsalgorithmus werden der B-Achs-Winkel (Fehlerkompensation Messsystem B-Achse) und die Temperatur berücksichtigt, wobei je nach Einsatzfall sowohl Temperaturkompensationen entlang der B-Achse als auch in X-Richtung, Y-Richtung oder Z-Richtung möglich sind.

Beim Einrichten des Drehfräsaggregates sollte in vorteilhafter Weise so vorgegangen werden, dass der Bezugs- und Referenzpunkt der X- und Z-Achse in die B-Achse gelegt wird.

Folgende Vorteile ergeben sich daraus:
- unabhängig von der B-Position kann immer die gleiche Position als fester Maschinenpunkt angefahren werden
- Einrichten Referenzpunkt X/Y/Z ist mit wenig Hilfsmitteln (Messuhr, Messdorn, Blockmaß) relativ einfach möglich - die X/Y- Achse durch Umkreisen des Dornes in der Werkzeugaufnahme und Ausblocken der Z- Achse in der Werkstückspindel
- Einrichten Referenzpunkt X/Y/Z bei allen Maschinen gleich, unabhängig von der jeweiligen kundenspezifischen Grundstellung (B=0° oder B=-90°)
- sollte ein zweites Aggregat (Fräsrad / Bohreinheit) auf dem gleichen oder einem getrennt angeordneten Schlitten an der Maschine angeordnet sein, kann der Abstand in horizontaler Achse unabhängig von der jeweiligen kundenspezifischen Grundstellung eingerichtet werden
- Position unabhängig von jeweiliger Werkzeugaufnahme (HSK, Capto) einrichtbar
- Kompensationen an Werkzeugspindel (Längenversatz z.B. bei Temperatur, Neigung) ohne einbeziehen der B-Achsposition unkompliziert möglich

Ein Ausführungsbeispiel der Erfindung ist in der Zeichnung dargestellt. Es zeigen:
Fig. 1 ein erfindungsgemäßes Drehfräsaggregat in der Vorderansicht
Fig. 2 das Drehfräsaggregat gemäß Fig. 1 in Schnittdarstellung entlang der Linie A - A

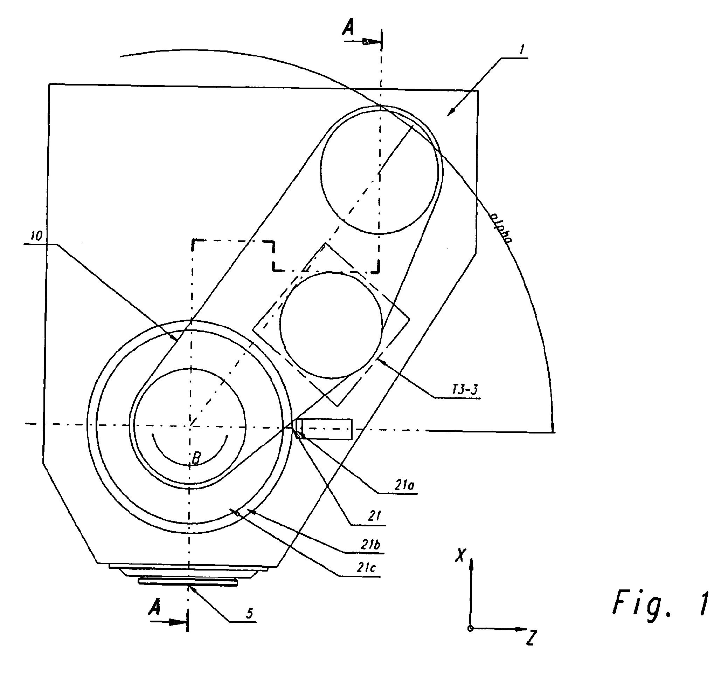

**Fig. 1** zeigt ein Drehfräsaggregat mit Direktantrieb, wobei mindestens eine Werkzeugspindel mit Werkzeugaufnahme 5 vorgesehen ist, deren Stellbewegungen mit einem konzentrisch um die B-Achse angeordneten Motor ausgeführt werden. Weiterhin ist ersichtlich, dass der B-Achse ein Achsmesssystem 21 zugeordnet ist.

Das Achsmesssystem 21 weist einen Abtastkopf 21 a, eine Maßverkörperung 21 b und eine Aufnahme für die Maßverkörperung 21c auf. Die Ausrichtung des Abtastkopfes 21a ist dargestellt, wobei der entsprechende Winkel als "alpha" bezeichnet ist.

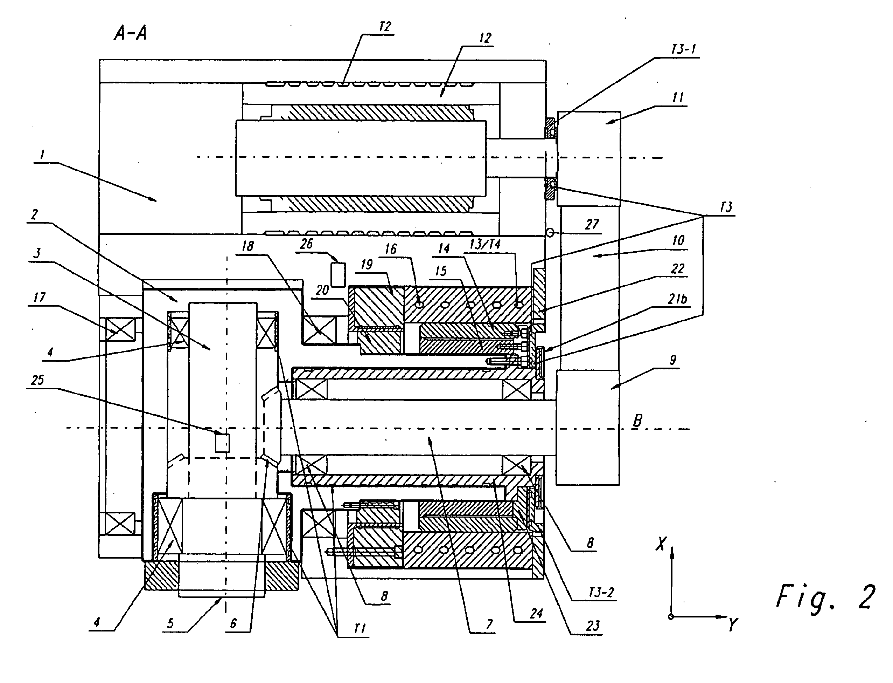

Aus **Fig. 2** ist ersichtlich, dass das Drehfräsaggregat aus einem Hauptgehäuse 1 und einem Werkzeugspindelgehäuse 2 besteht. Im Werkzeugspindelgehäuse 2 ist eine Werkzeugspindel 3 über Spindellager 4 abgestützt. An der Werkzeugspindel 3 ist eine Werkzeugaufnahme 5 vorgesehen. Die Werkzeugspindel 3 steht mit einer Kegelradstufe 6 in Wirkverbindung, die von einer hier als Ritzelwelle ausgestalteten Antriebswelle 7 betätigt wird. Die Ritzelwelle 7 ist über Spindellager 8 abgestützt. Das Werkzeugspindelgehäuse 2 kann um eine Achse "B" geschwenkt werden, die deckungsgleich zur Mittellängsachse der Ritzelwelle 7 verläuft. Die Ritzelwelle 7 ist über eine Keilriemenscheibe 9, einen Keilriemen 10 und eine weitere Keilriemenscheibe 11 mit dem Antriebsmotor 12 der Werkzeugspindel 3 verbunden. Das Werkzeugspindelgehäuse 2 ist beim Ausführungsbeispiel über ein erstes Lager der B-Achse 17 und ein zweites Lager der B-Achse 18 am Hauptgehäuse 1 abgestützt.

Der Werkzeugspindel 3 ist weiterhin ein Innenläufer-Torquemotor zugeordnet, der konzentrisch zur Achse "B" angeordnet ist. Der Stator 13 dieses Innenläufer-Torquemotors ist am Hauptgehäuse 1 des Drehfräsaggregates abgestützt, beispielsweise mittels Verschraubung. Der Rotor 14 des Innenläufer-Torquemotors ist am Werkzeugspindelgehäuse 2 abgestützt, beispielsweise über einen Zwischenring 15. Der Stator 13 kann auch über eine separate Statoranbindung 22 lagefixiert werden, während für den Rotor 14 eine Rotoranbindung 23 vorgesehen ist.

Aus **Fig. 2** ist weiterhin ersichtlich, dass dem Innenläufer-Torquemotor 13/14 eine aus einer Klemmhülse 19 und einer Bremsscheibe 20 bestehende Klemmeinrichtung zugeordnet ist. Die Klemmhülse 19 ist am Hauptgehäuse 1 abgestützt. Die Bremsscheibe 20 steht mit dem Werkzeugspindelgehäuse 2 in Wirkverbindung. Die Klemmeinrichtung kann in jeder beliebigen Stellung stufenlos geklemmt werden. Gemäß dem gezeigten Ausführungsbeispiel wird die Klemmung über die Klemmhülse 19 und die Bremsscheibe 20 in einem Bereich bewirkt, in dem kein Torsionsmoment auftritt, so dass eine hohe Steifigkeit und Geometriesicherheit gewährleistet sind.

Dem Drehfräsaggregat ist ein mit der Maschinensteuerung verbundenes Diagnosemodul zugeordnet, wodurch eine Eigendiagnose möglich wird. Hierfür weist das Diagnosemodul mindestens einen Temperatursensor 25 für das Werkzeugspindellager und einen Beschleunigungssensor 26 auf.

Dem Drehfräsaggregat ist außerdem eine Flüssigkeitskühlung mit mehreren Temperierungskreisläufen zugeordnet, wobei im Ausführungsbeispiel vier derartige Kreisläufe vorgesehen sind:
Ein erster Temperierungskreislauf T1 ist für die Lagerung der Werkzeugspindel 3 und für die Lagerung der Antriebswelle (Ritzelwelle) 7 für diese Werkzeugspindel 3 ausgestaltet.
Ein zweiter Temperierungskreislauf T2 ist für den Antriebsmotor 12 der Werkzeugspindel 3 ausgestaltet.

Ein dritter Temperierungskreislauf T3 ist für die Kraftübertragungselemente zwischen dem Antriebsmotor 12, der Antriebswelle (Ritzelwelle) 7 und der Werkzeugspindel 3 ausgestaltet. Dieser Temperierungskreislauf T3 (in Fig. 1 und Fig. 2 dargestellt) umfasst im Bereich der Keilriemenscheiben 11 und 9 jeweils eine antriebsseitige Temperierung T3-1 bzw. eine abtriebsseitige Temperierung T3-2 sowie eine Temperierung T3-3 für die Spannrollen. Im Bereich der Spannrollen ist außerdem ein Sperrluftanschluss 27 vorgesehen, mit dem im Fertigungsprozess primär Schmutzpartikel, Metallspäne und dergleichen vom Drehfräsaggregat ferngehalten werden.

Ein vierter Temperierungskreislauf T4 ist für den Innenläufer-Torquemotor ausgestaltet. Dieser Temperierungskreislauf T4 weist im Stator 13 integrierte Kanalstrukturen 16 für ein Kühlmittel auf.

Dem Drehfräsaggregat werden vorzugsweise mehrere Temperaturfühler zugeordnet. Somit können unabhängig von der jeweils konkreten Ausgestaltung eines Drehfräsaggregates die Betriebstemperaturen im Arbeitsraum der Maschine erfasst und auf Grundlage dieser Parameter die Temperaturen der Temperierungskreisläufe T1 bis T4 angepasst werden. Dabei wird der Temperierungskreislauf T4 des Innenläufer-Torquemotors 13/14 den Betriebstemperaturen im Arbeitsraum derart nachgeführt, dass der Temperaturunterschied "ΔT" gering ist.

Das Drehfräsaggregat kann in verschiedenartiger Weise weiter ausgestaltet werden. So kann z.B. ein Bruch- und Momentüberwachungssystem vorgesehen werden, für das als Eingangsparameter der Strom des B-Achsantriebs ausgewertet wird. Ebenso kann das Drehfräsaggregat mit einem Kompensationsalgorithmus zur Kompensation systematischer Fehler ausgestattet werden, wobei als Eingangsparameter der B-Achs-Winkel und die Temperatur ausgewertet werden. Weiterhin kann das Drehfräsaggregat mit einer dynamischen Vorsteuerung der IPO-Achsen und einer adaptiven Anpassung der Regelungsparameter betrieben werden. Schließlich ist vorgesehen, dass die Grundeinstellung des B-Achs-Lage- / Drehzahl- Stromreglers durch Umschalten auf verschiedene Parametersätze veränderbar ist.

### Bezugszeichenliste

- 1: Hauptgehäuse
- 2: Werkzeugspindelgehäuse
- 3: Werkzeugspindel
- 4: Spindellager Werkzeugspindel
- 5: Werkzeugaufnahme
- 6: Kegelradstufe
- 7: Antriebswelle / Ritzelwelle
- 8: Spindellager Ritzelwelle
- 9: Keilriemenscheibe

- 10: Keilriemen
- 11: Keilriemenscheibe
- 12: Antriebsmotor Werkzeugspindel
- 13: Stator Innenläufer-Torquemotor
- 14: Rotor Innenläufer-Torquemotor
- 15: Zwischenring
- 16: Kanalstrukturen für Kühlmittel
- 17: erstes Lager B-Achse
- 18: zweites Lager B-Achse
- 19: Klemmhülse
- 20: Bremsscheibe

- 21: Achsmesssystem bezüglich B-Achse
- 21 a: Abtastkopf
- 21 b: Maßverkörperung
- 21 c: Aufnahme für Maßverkörperung

- 22: Statoranbindung
- 23: Rotoranbindung
- 24: Z-Buchse
- 25: Temperatursensor Werkzeugspindellager
- 26: Beschleunigungssensor
- 27: Sperrluftanschluss

- B: B- Achse
- T1: Temperierungskreislauf Lagerung Werkzeugspindel und Ritzelwelle
- T2: Temperierungskreislauf Antriebsmotor Werkzeugspindel

- T3: Temperierungskreislauf Kraftübertragungselemente
- T3-1: antriebsseitige Temperierung
- T3-2: abtriebsseitige Temperierung
- T3-3: Temperierung für Spannrollen

- T-4: Temperierungskreislauf Innenläufer-Torquemotor

## Patentansprüche

1. Drehfräsaggregat für Werkzeugmaschinen und Bearbeitungssysteme, **dadurch gekennzeichnet,**
**dass** konzentrisch zur Schwenkachse des Werkzeugspindelgehäuses (B-Achse "B") der Werkzeugspindel (3) ein Torquemotor (13; 14) in einer Ausführung als Innenläufer mit innen angeordnetem Rotor und außen angeordnetem Stator angeordnet ist, dessen Rotor (14) direkt oder über einen Zwischenring (15) am Werkzeugspindelgehäuse (2) und dessen Stator (13) am Hauptgehäuse (1) des Drehfräsaggregates abgestützt ist,
**dass** der Werkzeugspindel (3) ein separater Antriebsmotor (12) parallel zur Schwenkachse des Werkzeugspindelgehäuses (B-Achse "B") zugeordnet ist, der am Hauptgehäuse (1) des Drehfräsaggregates abgestützt ist und der über eine Getriebestufe mit der Antriebswelle (7) der Werkzeugspindel (3) in Wirkverbindung steht und
**dass** dem Drehfräsaggregat eine Flüssigkeitskühlung zugeordnet ist, die mindestens zwei Temperierungskreisläufe (T) aufweist.

2. Drehfräsaggregat nach Anspruch 1, **dadurch gekennzeichnet,**
**dass** dem Innenläufer-Torquemotor (13; 14) eine radiale Klemmeinrichtung zugeordnet ist, die eine am Hauptgehäuse (1) abgestützte Klemmhülse (19) und eine mit dem Werkzeugspindelgehäuse (2) in Wirkverbindung stehende Bremsscheibe (20) aufweist.

3. Drehfräsaggregat nach Anspruch 1, **dadurch gekennzeichnet,**
**dass** dem Innenläufer-Torquemotor (13; 14) ein Achsmesssystem (21) zugeordnet ist, das bezüglich der Schwenkachse des Werkzeugspindelgehäuses (B-Achse "B") ausgerichtet ist und einen Abtastkopf (21a), eine Maßverkörperung (21 b) und eine Aufnahme für die Maßverkörperung (21c) aufweist.

4. Drehfräsaggregat nach Anspruch 1, **dadurch gekennzeichnet,**
**dass** die Getriebestufe zwischen dem Antriebsmotor (12) und der Antriebswelle (7) für die Werkzeugspindel (3) als ein Riementrieb mit Keilriemen (10) und Keilriemenscheiben (11; 9) ausgestaltet ist.

5. Drehfräsaggregat nach Anspruch 1, **dadurch gekennzeichnet,**
**dass** dem Drehfräsaggregat ein mit der Maschinensteuerung verbundenes Diagnosemodul zugeordnet ist, das zumindest einen Temperatursensor (25) für das Werkzeugspindellager und/oder einen Beschleunigungssensor (26) aufweist.

6. Drehfräsaggregat nach Anspruch 1, **dadurch gekennzeichnet,**
**dass** ein erster Temperierungskreislauf (T1) für die Lagerung der Werkzeugspindel (3) und für die Lagerung der Antriebswelle (7) für die Werkzeugspindel (3) ausgestaltet ist.

7. Drehfräsaggregat nach Anspruch 1, **dadurch gekennzeichnet,**
**dass** ein zweiter Temperierungskreislauf (T2) für den Antriebsmotor (12) der Werkzeugspindel (3) ausgestaltet ist.

8. Drehfräsaggregat nach Anspruch 1, **dadurch gekennzeichnet,**
**dass** ein weiterer Temperierungskreislauf (T3) für die Kraftübertragungselemente (9; 10; 11) zwischen dem Antriebsmotor (12) der Werkzeugspindel (3) und der Antriebswelle (7) für die Werkzeugspindel (3) ausgestaltet ist, wobei dieser Temperierungskreislauf (T3) eine antriebsseitige Temperierung (T3-1), eine abtriebsseitige Temperierung (T3-2) und eine Temperierung (T3-3) für die Spannrollen umfasst.

9. Drehfräsaggregat nach Anspruch 1, **dadurch gekennzeichnet,**
**dass** ein weiterer Temperierungskreislauf (T4) für den Innenläufer-Torquemotor (13; 14) ausgestaltet ist, wobei dieser Temperierungskreislauf (T4) im Stator (13) integrierte Kanalstrukturen (16) für ein Kühlmittel aufweist.

10. Verfahren zum Betrieb eines Drehfräsaggregates für Werkzeugmaschinen und Bearbeitungssysteme nach mindestens einem der Ansprüche 1 bis 9, **dadurch gekennzeichnet,**
**dass** das Drehfräsaggregat mit einer dynamischen Vorsteuerung der IPO-Achsen und einer adaptiven Anpassung der Regelungsparameter betrieben wird.

11. Verfahren zum Betrieb eines Drehfräsaggregates für Werkzeugmaschinen und Bearbeitungssysteme nach mindestens einem der Ansprüche 1 bis 9, **dadurch gekennzeichnet,**
**dass** die Grundeinstellung des B-Achs-Lage- / Drehzahl- Stromreglers durch Umschalten auf verschiedene Parametersätze veränderbar ist.

12. Verfahren zum Betrieb eines Drehfräsaggregates für Werkzeugmaschinen und Bearbeitungssysteme nach mindestens einem der Ansprüche 1 bis 9, **dadurch gekennzeichnet,**
**dass** die Betriebstemperaturen im Arbeitsraum der Maschine erfasst und hiervon abhängig die Temperaturen der Temperierungskreisläufe (T1 - T4) angepasst werden.

13. Verfahren zum Betrieb eines Drehfräsaggregates für Werkzeugmaschinen und Bearbeitungssysteme nach mindestens einem der Ansprüche 1 bis 9, **dadurch gekennzeichnet,**
**dass** beim Einrichten des Drehfräsaggregates der Bezugs- und Referenzpunkt der X- und Z-Achse in die B-Achse des Drehfräsaggregates gelegt wird.

## Claims

1. A rotating milling assembly for machine tools and machining systems, **characterized in that** a torque motor (13, 14) of an interior-rotor design with an interior rotor and exterior stator is arranged concentrically to the pivot axis of the tool spindle housing (B axis "B") of the tool spindle (3), its rotor (14) being supported either directly or by an intermediate ring (15) at a tool spindle housing (2) and its stator (13) being supported at the main housing (1) of said rotating milling assembly;
a separate drive motor (12) is attached to the tool spindle (3) and arranged parallel to the pivot axis of the tool spindle housing (B axis "B"), and said separate drive motor (12) is supported at a main housing (1) of said rotating milling assembly and in operative connection with the drive shaft (7) of said tool spindle (3) via a shifted gear, and
a liquid cooling unit is attached to the rotating milling assembly and comprises at least two temperature control circuits (T).

2. The rotating milling assembly according to claim 1, **characterized**
**in that** a radial clamping device is associated with the interior-rotor torque motor (13, 14) comprising a clamping sleeve (19) supported at the main housing (1) and a brake disk (20) that is in operative connection with the tool spindle housing (2).

3. The rotating milling assembly according to claim 1, **characterized**
**in that** an axis measuring system (21) is associated with the interior-rotor torque motor (13; 14) that is oriented relative to the pivot axis of the tool spindle housing (B axis "B") and comprises a scanning head (21 a), a material measure (21 b) and a receptor for the material measure (21 c).

4. The rotating milling assembly according to claim 1, **characterized**
**in that** the shifted gear between the drive motor (12) and the drive shaft (7) for the tool spindle (3) is designed as a belt drive with a V-belt (10) and V-belt pulleys (11; 9).

5. The rotating milling assembly according to claim 1, **characterized**
**in that** a diagnostic module connected to the machine control unit and comprising at least one temperature sensor (25) for the tool spindle bearing and/or an acceleration sensor (26) is associated with the rotating milling assembly.

6. The rotating milling assembly according to claim 1, **characterized**
**in that** a first temperature control circuit (T1) is configured for the bearing of the tool spindle (3) and for the bearing of the drive shaft (7) for the tool spindle (3).

7. The rotating milling assembly according to claim 1, **characterized**
**in that** a second temperature control circuit (T2) is configured for the drive motor (12) of the tool spindle (3).

8. The rotating milling assembly according to claim 1, **characterized**
**in that** another temperature control circuit (T3) is configured for the power transfer elements (9; 10; 11) between the drive motor (12) of the tool spindle (3) and the drive shaft (7) for the tool spindle (3), and said temperature control circuit (T3) comprises an input-end temperature control section (T3-1), an output-end temperature control section (T3-2) and a temperature control section (T3-3) for the tensioner pulleys.

9. The rotating milling assembly according to claim 1, **characterized**
**in that** another temperature control circuit (T4) is configured for the interior-rotor torque motor (13; 14) and said temperature control circuit (T4) comprises integrated duct structures (16) for a coolant in the stator (13).

10. A method for operating a rotating milling assembly for machine tools and machining systems according to at least one of the preceding claims 1 to 9, **characterized in that** the rotating milling assembly is operated using a dynamic pre-control of the IPO axes and adaptive adjustment of the control parameters.

11. A method for operating a rotating milling assembly for machine tools and machining systems according to at least one of the preceding claims 1 to 9, **characterized in that** the basic setting of the B axis position / speed / power controller can be changed by switching to various parameter sets.

12. A method for operating a rotating milling assembly for machine tools and machining systems according to at least one of the preceding claims 1 to 9, **characterized in that** the operating temperatures in the working chamber of the machine are detected and the temperatures of the temperature control circuits (T1 - T4) are adjusted as a function thereof.

13. A method for operating a rotating milling assembly for machine tools and machining systems according to at least one of the preceding claims 1 to 9, **characterized in that** the reference points of the X and Z axes are placed within the B axis of the rotating milling assembly when setting up the rotating milling assembly.

## Revendications

1. Unité de fraisage rotatif pour machines-outils et systèmes d'usinage, **caractérisé en ce qu'**un moteur torque (13; 14) concentriquement aligné avec l'axe pivotant de la poupée fixe (axe B - "B") de l'outil broche (3) est conçu comme induit intérieur avec rotor et stator qui, eux, sont respectivement montés à l'intérieur et à l'extérieur, le rotor (14) du moteur étant lié, directement ou par l'intermédiaire d'une bague intermédiaire (15), à la poupée fixe de l'outil (2), tandis que le stator (13) de celui-ci est lié au bâti principale (1) de l'unité de fraisage rotatif,
que l'outil broche (3) est équipé d'un moteur d'entraînement séparé (12) parallèlement aligné avec l'axe pivotant de la poupée fixe (axe B - "B") qui, lui, est lié au bâti principale (1) de l'unité de fraisage rotatif et raccordé, en liaison fonctionnelle et par l'intermédiaire d'un rapport de multiplication, à l'arbre menant (7) de l'outil broche (3), et
que l'unité de fraisage rotatif est dotée d'un refroidissement par liquide avec au moins deux circuits d'équilibrage de température (T).

2. Unité de fraisage rotatif suivant la revendication 1, **caractérisé en ce que** le moteur torque à induit intérieur (13; 14) est pourvu d'un élément de serrage radial avec une douille de serrage (19) fixée sur le bâti principale (1) et un disque à frein (20) raccordé par une liaison fonctionnelle à la poupée fixe de l'outil (2).

3. Unité de fraisage rotatif suivant la revendication 1, **caractérisé en ce que** le moteur torque à induit intérieur (13; 14) est équipé d'un système de mesure axiale (21) qui, lui, est aligné avec l'axe pivotant de la poupée fixe (axe B - "B") de l'outil et qui comprend une tête de lecture (21 a), une mesure matérialisée (21 b) et une porte-outil pour la mesure matérialisée (21 c).

4. Unité de fraisage rotatif suivant la revendication 1, **caractérisé en ce que** le rapport de multiplication pour l'outil broche (3) disposé entre le moteur d'entraînement (12) et l'arbre menant (7) est conçu comme entraînement par courroie avec une courroie trapézoïdale (10) et des poulies à gorges (11; 9).

5. Unité de fraisage rotatif suivant la revendication 1, **caractérisé en ce que** l'unité de fraisage rotatif est dotée d'un module de diagnostic raccordé à la commande de la machine qui, lui, comprend au moins un capteur thermique (25) pour le roulement de l'outil broche et/ou un capteur d'accélération (26).

6. Unité de fraisage rotatif suivant la revendication 1, **caractérisé en ce qu'**il y est prévu un premier circuit d'équilibrage de température (T1) pour le roulement de l'outil broche (3) et pour le roulement de l'arbre menant (7) de l'outil broche (3).

7. Unité de fraisage rotatif suivant la revendication 1, **caractérisé en ce qu'**il y est prévu un deuxième circuit d'équilibrage de température (T2) pour le moteur d'entraînement (12) de l'outil broche (3).

8. Unité de fraisage rotatif suivant la revendication 1, **caractérisé en ce qu'**il y est prévu, entre le moteur d'entraînement (12) de l'outil broche (3) et l'arbre menant (7) de l'outil broche (3), un autre circuit d'équilibrage de température (T3) pour les éléments de transmission (9; 10; 11), ce circuit d'équilibrage de température (T3) comprenant un équilibrage de température tant du côté entraînement (T3-1) que du côté sortie (T3-2), ainsi qu'un équilibrage de température (T3-3) pour les rouleaux de tension.

9. Unité de fraisage rotatif suivant la revendication 1, **caractérisé en ce qu'**il y est prévu un autre circuit d'équilibrage de température (T4) pour le moteur torque à induit intérieur (13; 14), le stator (13) de ce circuit d'équilibrage de température (T4) étant équipé de canaux intégrés (16) pour l'agent réfrigérant.

10. Procédé de fonctionnement d'une unité de fraisage rotatif pour machines-outils et de systèmes d'usinage suivant au moins une des revendications 1 à 9, **caractérisé en ce que** l'unité de fraisage rotatif est équipée d'une précommande dynamique des axes d'interpolation et d'un système adaptateur des paramètres de réglage.

11. Procédé de fonctionnement d'une unité de fraisage rotatif pour machines-outils et de systèmes d'usinage suivant au moins une des revendications 1 à 9, **caractérisé en ce que**, grâce à des différents groupes de paramètres, le réglage de base du positionnement de l'axe B / du régulateur de vitesse et d'intensité de courant peut être variés par commutation.

12. Procédé de fonctionnement d'une unité de fraisage rotatif pour machines-outils et de systèmes d'usinage suivant au moins une des revendications 1 à 9, **caractérisé en ce que** les températures de service dans l'espace de travail de la machine y sont saisies et que les températures des circuits d'équilibrage de température (T1 - T4) sont adaptées en fonction des températures mesurées.

13. Procédé de fonctionnement d'une unité de fraisage rotatif pour machines-outils et de systèmes d'usinage suivant au moins une des revendications 1 à 9, **caractérisé en ce que** lors de la mise au point de l'unité de fraisage rotatif, le point de référence des axes X et Z est déplacé vers l'axe B de l'unité de fraisage rotatif.
